# EUROPÄISCHE PATENTANMELDUNG

(11) **EP 4 696 543 A1**
(43) Veröffentlichungstag der Anmeldung: **18.02.2026**
(21) Anmeldenummer: 24194626.8
(22) Anmeldetag: 14.08.2024
(51) Int. Cl.: B60L 53/14, B60L 53/18, B60L 53/302, B60L 53/30, B60L 53/31, B60L 53/53, G06Q 50/06, G07F 15/00

(54) **LADEVORRICHTUNG UND VERFAHREN ZUM INSTALLIEREN**

(71) Anmelder: Jolt Energy GmbH, 81379 München (DE)
(72) Erfinder: BERGSTRÄSSER, Andreas, 80333 München (DE); LÜDTKE, Konstantin, 80333 München (DE); GERSCH, Roland, 80686 München (DE)
(74) Vertreter: Isarpatent

(57) **Zusammenfassung**

Die vorliegende Erfindung betrifft eine Ladevorrichtung (1) für elektrische Straßenfahrzeuge mit einem Gehäuse (2), mit einer sich in einem oberen Randbereich (RB) erstreckenden Aussparung (7), einem Lager (3), welches in oder an der Aussparung (7) im Bereich eines Ecks angeordnet ist und einem Ausleger (4), welcher in seinem ersten Ende (4a) in dem Randbereich (RB) anhand eines Lagers (3) schwenkbar gelagert und in seinem zweiten Ende (4b) mit einer Kabelaufhängung (5) koppelbar ist, wobei der Ausleger (4) in einem ausgefahrenen Zustand von dem ersten Ende (4a) bis zu dem zweiten Ende (4b) über das Gehäuse (2) hinaus ausschwenkbar und ein einem eingefahrenen Zustand im Wesentlichen bündig mit dem Gehäuse (2) in der Aussparung (7) aufnehmbar ist. Die vorliegende Erfindung betrifft ferner ein Verfahren zum Installieren einer derartigen Ladevorrichtung (1).

## Beschreibung

### GEBIET DER ERFINDUNG

Die vorliegende Erfindung betrifft eine Ladevorrichtung für elektrische Straßenfahrzeuge sowie ein Verfahren zum Installieren einer Ladevorrichtung.

### TECHNISCHER HINTERGRUND

Im Bereich der Ladevorrichtungen für elektrische Stra-βenfahrzeuge existieren bisweilen unterschiedlichste Lösungen, die es ermöglichen, Antriebsbatterien der Fahrzeuge aufzuladen. Derartige Ladevorrichtungen sind in unterschiedlichen Formen und Ausführungen erhältlich, um den vielfältigen Anforderungen der Nutzer gerecht zu werden. Dabei wird insbesondere Wert auf die Bereitstellung einer stabilen und sicheren Energieübertragung zum Fahrzeug mittels Ladekabel gelegt, um eine zuverlässige Nutzung der Fahrzeuge zu gewährleisten.

Derartige Ladekabel können jedoch insbesondere bei Schnelladestationen, sogenannte High Performance Charger, HPC, sehr dick und dementsprechend schwer ausfallen, da hohe Ströme übertragen werden müssen und oftmals auch Flüssigkeitskühlungen in die Kabel integriert sind. Zur nutzerfreundlichen Handhabung derartiger dicker Ladekabel existieren unterschiedliche Varianten. Bei bekannten Varianten sind die Ladekabel vergleichsweise kurz ausgebildet und die Ladevorrichtungen direkt am Parkplatz an der üblichen Position einer Ladebuchse, beispielsweise hinten links am Fahrzeug, angeordnet. Nachteilig ist es für Fahrzeuge mit einer anderen Ladebuchsenposition, beispielsweise hinten rechts oder vorne links, entsprechend schwierig sich ohne Behinderung benachbarter Ladeplätze geeignet an der Ladevorrichtung zu positionieren.

Abhilfe bieten Ladevorrichtungen mit längeren Ladekabeln, die an zusätzlich an der Ladesäule angebrachten, oftmals schwenkbaren oder verstellbaren Elementen gelagert sind, um die Handhabung zu erleichtern und insbesondere ein Schleifen des langen Kabels am Boden zu vermeiden. Diese Systeme beinhalten aufgrund der Auslegerweite und des relativ hohen Kabelgewichts oft massive mechanische Strukturen und erfordern eine präzise Ausrichtung bei der Installation. Derartige Ladevorrichtungen sind jedoch in ihrer optischen Anmutung und ihrem Raumbedarf ausladend und durch die massiven mechanischen Strukturen zur Kabelführung dominiert. Beispielsweise beschreibt die DE 20 2017 100795 U1 einen langen Auslegerarm, der ein langes Ladekabel führt, jedoch nicht einklappbar ist. Auch existieren motorische Lösungen wie in der DE 10 2022 129 145 B3 oder in der DE 10 2014 109068 A1 beschrieben, die jedoch einen Antrieb und eine Sensorik sowie eine massive Wand zur Befestigung benötigen, was entsprechend nicht an jedem Ort und auch nur entsprechend aufwändig umzusetzen ist.

Im Falle kompakter Lösungen mit langen Kabeln sind diese oftmals in der Handhabung umständlich, was in Bezug auf die Anbringung der Ladekabel deren Biegeradien beansprucht und zu Beschädigungen der Leitungen im Inneren der Ladekabel führen kann. Beispielswiese beschreibt die DE 20 2020 106 059 U1 eine Ladestation mit einer Seilwinde, die das Kabel von oben auf Zug hält. Nachteilig ist das Ladekabel so aber beim von der Seilwinde entfernten Einstecken in eine Ladebuchse eines Fahrzeugs von schräg oben auf Zug belastet, was das Kabel direkt an der Ladebuchse auf Biegung belastet und das Einstecken erschwert. Ferner ist nachteilig zusätzlich zu dem Kabel ein Zugseil im Aufenthaltsbereich des Nutzers vorhanden. Dies kann insbesondere bei widrigen Wetterbedingungen und/oder in der Dunkelheit für die diese Zugseile schlecht sehenden Nutzer problematisch sein.

### ZUSAMMENFASSUNG DER ERFINDUNG

Vor diesem Hintergrund liegt der vorliegenden Erfindung die Aufgabe zugrunde, eine verbesserte Ladevorrichtung bereitzustellen, die diese Nachteile überwindet sowie ein vereinfachtes Verfahren zur Installation einer Ladevorrichtung ermöglicht.

Erfindungsgemäß wird diese Aufgabe durch eine Ladevorrichtung mit den Merkmalen des Patentanspruchs 1 und/oder durch ein Verfahren mit den Merkmalen des Patentanspruchs 14 gelöst.

Demgemäß ist vorgesehen:
- Eine Ladevorrichtung für elektrische Straßenfahrzeuge, mit: einem Gehäuse, das eine mehreckige Grundfläche aufweist und in einem oberen Randbereich eine Aussparung aufweist; einem Lager, welches in oder an der Aussparung im Bereich eines Ecks angeordnet ist; und einem Ausleger, welcher ein erstes Ende und ein zweites Ende aufweist, wobei das erste Ende in dem Randbereich anhand des Lagers schwenkbar gelagert ist und das zweite Ende mit einer Kabelaufhängung für ein Ladekabel koppelbar ist, wobei der Ausleger in einem ausgefahrenen Zustand von dem ersten Ende bis zu dem zweiten Ende über das Gehäuse hinaus ausschwenkbar und in einem eingefahrenen Zustand im Wesentlichen bündig mit dem Gehäuse in der Aussparung aufnehmbar ist.
- Ein Verfahren zum Installieren einer Ladevorrichtung, insbesondere einer Ladevorrichtung nach einem der vorstehenden Ansprüche, umfassend die Schritte: Bereitstellen einer Ladevorrichtung mit einem Gehäuse, welches einen Randbereich aufweist, in dem zumindest zwei mechanische Aufnahmepunkte angeordnet sind; Koppeln der Aufnahmepunkte mit zumindest einem Transportelement, das zum Transport und/oder zur Ausrichtung der Ladevorrichtung ausgelegt ist; Positionieren der Ladevorrichtung an einen vorbestimmten Ort, wobei die Ladevorrichtung über zumindest ein Transportelement transportiert und/oder ausgerichtet wird; Entfernen des zumindest einen Transportelements von den Aufnahmepunkten; und Koppeln eines Lagers mit den Aufnahmepunkten zur Aufnahme eines Auslegers, der in dem Randbereich anhand des Lagers schwenkbar gelagert wird.

Die der vorliegenden Erfindung zugrundeliegende Idee darin, dass das Gehäuse einer Ladevorrichtung, das eine mehreckige Grundfläche aufweist, in einem oberen Randbereich eine Aussparung besitzt. Die Aussparung ist dabei insbesondere seitlich nicht begrenzt und beinhaltet auch die Erstreckung von einer Ecke zu einer weiteren Ecke. Insbesondere erstreckt sich die Aussparung zumindest zwischen zwei Ecken. Diese besondere Formgebung des Gehäuses ermöglicht eine flexible und im eingefahrenen Zustand platzsparende, sichere sowie ästhetische Anordnung eines für eine Kabelaufhängung vorgesehenen Auslegers in der Aussparung.

Ein weiteres Merkmal ist das Lager, welches in oder an der Aussparung im Bereich eines Ecks angeordnet ist. Diese Positionierung des Lagers erlaubt eine stabile und dennoch händisch bzw. durch händisches Verlagern des Ladekabels bewegliche Befestigung bei gleichzeitig maximal über das Gehäuse hinausgehendem Schwenkradius des Auslegers.

Der Ausleger selbst ist derart gestaltet, dass er ein erstes Ende und ein zweites Ende aufweist. Das erste Ende ist im Randbereich anhand des Lagers schwenkbar gelagert, während das zweite Ende mit einer Kabelaufhängung für ein Ladekabel koppelbar ist. Diese schwenkbare Lagerung des Auslegers bietet den Vorteil, dass der Ausleger in einem ausgefahrenen Zustand von dem ersten Ende bis zu dem zweiten Ende über das Gehäuse hinaus ausschwenkbar ist. Dabei kann ein über das Gehäuse hinausgehender Schwenkradius vorteilhaft im Wesentlichen die ganze Länge des Auslegers betragen. Der Ausleger ist in seiner Ausbildung sowohl als zweiteilige Variante seitlich ausfahrbar als auch als einteilige Variante frontal ausfahrbar umsetzbar. Auch drei- oder mehrteilige Varianten sind je nach Dimensionierung des Auslegers und der Ausnehmung möglich.

Dabei kann der Ausleger an der Kabelaufhängung von der Bündigkeit mit dem Gehäuse abweichen. In einer vorteilhaften Ausführung ist diese Abweichung senkrecht zur Gehäusewand, um das Kabel mit minimalem Materialeinsatz so weit vom Gehäuse entfernt zu platzieren, so dass der Ausleger vollständig einfahrbar bleibt. Durch Vergrößerung des Abstands zur Gehäusewand können weitere vorteilhafte Effekt erzielt werden. So kann unter anderem ein Schlagen des Kabels gegen die Gehäusewand vermieden werden, oder eine kontinuierliche, Lichtverschmutzung reduzierende Beleuchtung der Gehäusewand mit dort angeordneten Bedienelementen erreicht werden.

Außerdem ist der Ausleger gemäß einer Ausführungsform automatisch rückstellbar, um den Ausleger nach dem Gebrauch selbstständig in seine Ausgangsposition zurückzuführen und ihn im eingefahrenen Zustand im Wesentlichen bündig mit dem Gehäuse in der Aussparung aufzunehmen. Auf diese Weise ist der Ausleger in der Ausnehmung gesichert gegen unerwünschtes Ausschwenken, z. B. durch Wind. Zum einen ist bei mehreren Auslegerteilen eine automatische Rückstellung zwischen den einzelnen Auslegerteilen, zum anderen und auch bei einem einteiligen Ausleger eine automatische Rückstellung zwischen Ausleger und Rahmen vorgesehen. Diese Konstruktion des Auslegers ermöglicht eine flexible Nutzung der Ladevorrichtung, wobei sie variabel an eine Höhe und Position eines anzuschließenden Fahrzeugs anpassbar und dennoch manuell betätigbar ist.

Desweiteren ist der Ausleger in einem eingefahrenen Zustand im Wesentlichen bündig mit dem Gehäuse in der Aussparung aufnehmbar. Diese kompakte und platzsparende Anordnung im eingefahrenen Zustand stellt sicher, dass die Ladevorrichtung auch bei Nichtgebrauch wenig Platz beansprucht, keine Hohlräume oder Vorsprünge bietet, die Schmutz aufnehmen können und optisch ansprechend bleibt. Außerdem gewährleistet die Bündigkeit des Auslegers in dem Gehäuse in dem eingefahrenen Zustand eine Kompaktheit für geringen Raumbedarf und Witterungsbeständigkeit der Konstruktion, beispielsweise bei Unwettern.

Auf diese Weise wird erfindungsgemäß eine Ladevorrichtung bereitgestellt, die sowohl sicher als auch nutzerfreundlich in der Handhabung und dennoch kompakt in den Ausmaßen ist.

Ein Verfahren zum Installieren einer Ladevorrichtung für elektrische Straßenfahrzeuge ist erfindungsgemäß darauf ausgelegt, eine effiziente und zuverlässige Installation sicherzustellen. Erfindungsgemäß wird so auch die Installation einer stabilen und funktionsfähigen Ladevorrichtung gewährleistet. Zumindest zwei mechanische Aufnahmepunkte, vorzugsweise drei oder vier, an welchen das Lager befestigt werden soll, bilden dabei auch die strukturelle Grundlage für eine sichere und stabile Montage der in den Aufnahmepunkten einbringbaren Transportelemente. Die Verwendung von zumindest einem Transportelement ermöglicht es, die Ladevorrichtung sicher zu transportieren und genau auszurichten. Anschließend wird nach der erfolgreichen Positionierung das zumindest eine Transportelement von den Aufnahmepunkten entfernt. Dies gewährleistet, dass die Ladevorrichtung stabil an ihrem endgültigen Standort verbleibt. Schließlich wird dann das Lager mit den Aufnahmepunkten gekoppelt. Das Lager dient zur Aufnahme eines Auslegers, der in dem Randbereich des Gehäuses schwenkbar gelagert wird. Diese Anordnung ermöglicht schließlich die erfindungsgemäße sichere und benutzerfreundliche Handhabung des Auslegers.

Das erfindungsgemäße Verfahren stellt somit sicher, dass die Ladevorrichtung präzise und sicher installiert wird. Die Verfahrensschritte sind so konzipiert, dass sie eine einfache und klare Installation ermöglichen, die gleichzeitig die strukturelle Integrität und Funktionalität der Ladevorrichtung gewährleistet.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer bevorzugten Ausführungsform der Ladevorrichtung weist das Gehäuse einen Anschlussbereich auf, in welchem zumindest zwei Aufnahmepunkte, vorzugsweise drei oder vier Aufnahmepunkte, für zumindest ein Transportelement zur Kopplung des Lagers mit dem Gehäuse vorgesehen sind. Die Aufnahmepunkte ermöglichen eine stabile und flexible Verbindung des Lagers mit dem Gehäuse, was eine einfache Installation und sicheren Halt des Auslegers garantiert. Außerdem gewährleisten diese Aufnahmepunkte bei der Kopplung mit den Transportelementen einen sicheren Transport und eine zuverlässige Installation der Ladevorrichtung vor Ort.

Gemäß einer Ausführungsform der Ladevorrichtung ist der Anschlussbereich innerhalb der Aussparung angeordnet. Diese Anordnung bietet den Vorteil, dass der Anschlussbereich geschützt und gleichzeitig leicht zugänglich ist, was die Montage und Demontage des Lagers erleichtert.

Gemäß einer Ausführungsform der Ladevorrichtung weist das Gehäuse zur mechanischen Stützung des Auslegers einen umlaufenden Rahmen auf, der insbesondere im Wesentlichen bündig mit dem Gehäuse abschließt. Alternativ oder zusätzlich ist der Rahmen an dem Gehäuse befestigt, insbesondere lösbar befestigt. Somit ist der Rahmen sicher an dem Gehäuse gelagert und dennoch in seiner Ausgestaltung frei konfigurierbar bzw. bei Bedarf austauschbar, beispielsweise um die Konfiguration zu wechseln von einem Rahmen mit einteiligen Auslegern auf einen anderen Rahmen mit mehrteiligen Auslegern oder zur Änderung der Ausschwenkrichtung oder Position oder Anzahl der Ausleger, oder dergleichen. Der umlaufende Rahmen schließt insbesondere im Wesentlichen bündig mit dem Gehäuse ab, was die Stabilität und ästhetische Integration des Auslegers in das Gesamtdesign der Ladevorrichtung verbessert.

Gemäß einer Ausführungsform der Ladevorrichtung ist das Lager in dem umlaufenden Rahmen vorgesehen. Insbesondere ist das Lager in dem umlaufenden Rahmen aufgenommen oder, zumindest teilweise, integral damit ausgebildet. Diese Konstruktion bietet eine robuste und langlebige Lagerung des Auslegers, wodurch die Lebensdauer der Ladevorrichtung erhöht und Wartungsaufwand minimiert wird.

Gemäß einer Ausführungsform der Ladevorrichtung ist die Aussparung um das Gehäuse umlaufend ausgebildet und der Rahmen in der Aussparung aufgenommen. Diese Anordnung sorgt für eine gleichmäßige Verteilung der Kräfte und eine kompakte Bauweise sowie für ein harmonisches Erscheinungsbild der Ladevorrichtung, das für Kunden attraktiv wirkt.

Gemäß einer Ausführungsform der Ladevorrichtung weist der Rahmen eine darin integrierte Beleuchtung auf. Die Beleuchtung verbessert die Sichtbarkeit der Ladevorrichtung bei schlechten Lichtverhältnissen und erhöht so die Sicherheit bei der Nutzung. Ferner kann auf diese Weise eine Ladeanzeige realisiert werden, beispielsweise durch entsprechende Farbkodierung der Beleuchtung, wie beispielsweise grüne Beleuchtung für Ladebereit und/oder blaue Beleuchtung für in Gebrauch oder nicht ladebereit.

Gemäß einer Ausführungsform der Ladevorrichtung ist der Ausleger manuell ausschwenkbar. Der Ausleger und/oder das Lager weisen insbesondere eine Rückholeinrichtung zum selbsttätigen Einfahren des Auslegers auf. Der Ausleger liegt somit vorzugsweise in dem eingefahrenen Zustand an dem Gehäuse an und ist besonders bevorzugt in zumindest einer Richtung bündig damit angeordnet. Somit wird nach einem manuellen Ausschwenken bei einer Freigabe des Ladekabels der Ausleger selbsttätig in den eingefahrenen Zustand zurückversetzt, in dem der Ausleger in einer vorbestimmten Position, insbesondere in einem Anschlag, sicher und auf platzsparende sowie ästhetische Weise gelagert ist, die außerdem Hohlräume und Vorsprünge vermeidet, in bzw. an denen sich Schmutz ablagern könnte, und auch die der Witterung ausgesetzte Fläche minimiert. Somit ermöglicht diese Konstruktion eine platzsparende, langlebige und ästhetisch ansprechende Integration des Auslegers in die Ladevorrichtung. Ein Vorteil der Rückholeinrichtung zum selbsttätigen Einfahren des Auslegers besteht darin, dass sie die Bedienung der Ladevorrichtung erheblich erleichtert und die Sicherheit erhöht. Benutzer müssen den Ausleger nicht manuell zurückführen, was Zeit spart und den Bedienkomfort erhöht. Zudem wird durch den Rückholmechanismus das automatische Einfahren sichergestellt, sodass der Ausleger stets in einer sicheren Position ruht, wodurch potenzielle Beschädigungen oder Unfälle vermieden werden können.

Gemäß einer Ausführungsform der Ladevorrichtung weist der Ausleger eine integrierte Beleuchtung auf. Insbesondere ist die integrierte Beleuchtung in dem Ausleger eingefasst. Die Beleuchtung sorgt für eine bessere Sichtbarkeit des Auslegers und erleichtert die Handhabung, insbesondere bei schlechten Lichtverhältnissen. Die integrierte Beleuchtung bietet zudem die Option den Status des Ladevorgangs durch farbige Anzeigen sichtbar zu machen. Insbesondere im Falle mehrerer Ladekabel kann somit ein spezifischer Zustand des jeweiligen Ladepunkts direkt an dem jeweiligen Ladekabel angezeigt werden. Die integrierte Beleuchtung erleichtert ferner insbesondere das Auffinden und Anschließen des Ladekabels, beispielsweise in schlecht beleuchteten Umgebungen, was den Bedienkomfort erhöht. Gemäß einer Ausführungsform ist die Beleuchtung in den Ausleger eingefasst, was zu einem schlanken und ansprechenden Design führt, ohne dass zusätzliche externe Beleuchtungselemente erforderlich sind. Dadurch, dass die Beleuchtung in den Ausleger integriert ist, ist sie besser vor äußeren Einflüssen wie Witterung und Vandalismus geschützt, was die Langlebigkeit der Ladevorrichtung erhöht.

Gemäß einer Ausführungsform der Ladevorrichtung umfasst die Beleuchtung ein zumindest abschnittsweise längs des Auslegers verlaufendes Lichtelement, das insbesondere zum Abstrahlen in eine Umgebung ausgelegt ist. Das längs des Auslegers verlaufende Lichtelement sorgt für eine bessere Sichtbarkeit des Auslegers selbst sowie der Ladevorrichtung und des gesamten Ladebereichs, insbesondere bei schlechten Lichtverhältnissen oder in der Dunkelheit. Dies erhöht die Sicherheit sowohl für den Benutzer als auch für andere Verkehrsteilnehmer, und signalisiert schon von weitem den Gebrauch des jeweiligen Ladepunkts. Die Beleuchtung entlang des Auslegers ermöglicht es den Benutzern, die Position und den Status der Ladevorrichtung leichter zu erkennen und bereits entsprechend geeignet an der Ladevorrichtung einzuparken, um das Ladekabel einfacher zu handhaben, was die Benutzerfreundlichkeit der Ladevorrichtung verbessert. Durch das Abstrahlen des Lichts in die Umgebung wird der Bereich um die Ladevorrichtung ebenfalls besser ausgeleuchtet, was dazu beiträgt, Stolperfallen und andere Gefahrenquellen in der Nähe der Ladevorrichtung zu minimieren.

Gemäß einer Ausführungsform der Ladevorrichtung weist die Beleuchtung im Bereich des zweiten Endes des Auslegers ein Beleuchtungselement auf, welches insbesondere zur Beleuchtung eines mit der Kabelaufhängung geführten Ladekabels ausgelegt ist. Das Beleuchtungselement am zweiten Ende des Auslegers sorgt für eine gezielte Ausleuchtung des Bereichs um das Ladekabel, was die Handhabung und das Anschließen des Kabels erleichtert, insbesondere bei schlechten Lichtverhältnissen. Durch die gezielte Beleuchtung der mit der Kabelaufhängung geführten Ladekabels wird die Gefahr von Unfällen und Beschädigungen beim Anschließen und Abziehen des Kabels verringert, was die Sicherheit für die Nutzer erhöht.

Die gezielte Ausleuchtung des Bereichs um das Ladekabel erleichtert das Finden und Handhaben des Ladekabels und das Einführen des Ladesteckers in die Ladebuchse eines Fahrzeugs, wodurch die Bedienung der Ladevorrichtung komfortabler und benutzerfreundlicher wird. Die Beleuchtung ermöglicht insbesondere die problemlose Nutzung der Ladevorrichtung auch bei Nacht oder in dunklen Umgebungen, ohne dass eine zusätzliche externe Lichtquelle erforderlich ist. Das Beleuchtungselement am Auslegerende kann insbesondere so wetterbeständig und lichtstark gestaltet werden, dass auch bei widrigen Witterungsbedingungen zuverlässig die problemlose Nutzung der Ladevorrichtung ermöglicht. Gemäß einer besonders vorteilhaften Ausführungsform ist an dem zweiten Ende ein weißes Licht in einen nach unten zeigenden Teil des Auslegers so integriert, dass das Licht nur nach unten abgestrahlt wird. So schwenkt das Licht automatisch mit dem zweiten Ende des Auslegers in Richtung des Verbindungspunkts, und Lichtverschmutzung wird im Vergleich zu anderen Anordnungen des Lichts reduziert. In einer weiteren vorteilhaften Ausführungsform wird das weiße Licht nur beim Schwenken des Auslegers aktiviert, und nach einer vorbestimmten Stillstandszeit, zum Beispiel dreißig Sekunden, wieder deaktiviert, was die Lichtverschmutzung weiter verringert.

Gemäß einer Ausführungsform der Ladevorrichtung umfasst das Gehäuse eine Belüftungseinrichtung, insbesondere für ein im Inneren des Gehäuses aufnehmbares Klimatisierungsmodul. Insbesondere ist dazu in oder an der Aussparung im eingefahrenen Zustand des Auslegers zwischen Gehäuse und Ausleger ein für einen Luftstrom der Belüftungseinrichtung ausgelegter Abstand und/oder ein für einen Luftstrom der Belüftungseinrichtung ausgelegtes Lüftungsgitter vorgesehen. Die Belüftungseinrichtung sorgt für eine effektive Kühlung der im Inneren des Gehäuses befindlichen Elektronik und, in einer vorteilhaften Ausführung, für eine effektive Kühlung eines im Inneren des Gehäuses befindlichen Batteriemoduls, was eine Überhitzung verhindert und die Lebensdauer der Elektronik und der Batterie verlängert. Gemäß einer Weiterbildung ist daher ferner ein im Inneren des Gehäuses aufnehmbares Batteriemodul vorgesehen, das durch die Belüftungseinrichtung gekühlt werden kann. Insbesondere ist die Kühlung des Batteriemoduls direkt durch den Luftstrom der Belüftungseinrichtung möglich. Alternativ oder zusätzlich ist eine indirekte Kühlung des Batteriemoduls über das Klimatisierungsmodul möglich, welches wiederum durch den Luftstrom gekühlt werden kann. Durch die Kühlung der Elektronik und der Batterie kann deren Leistungsfähigkeit gesteigert und die Effizienz der Ladevorrichtung insgesamt verbessert werden, was zu kürzeren Ladezeiten und höherer Zuverlässigkeit führt. Durch die Vermeidung von Überhitzung und die damit einhergehende Schonung der Elektronik und der Batterie und anderer Komponenten trägt die Belüftungseinrichtung zur verbesserten Langlebigkeit und Nachhaltigkeit der Ladevorrichtung bei. Ein entsprechend ausgelegter Abstand des Auslegers und/oder ein entsprechendes Lüftungsgitter kann den Luftstrom optimieren und somit den Geräuschpegel der Belüftungseinrichtung reduzieren, was vorteilhaft zu einem leiseren Betrieb der Ladevorrichtung führt. Die Vorteile der Vermeidung offener Hohlräume und Vorsprünge können in einer vorteilhaften Ausführung dadurch gewahrt bleiben, dass ein formschlüssiges Lüftungsgitter an dem Gehäuse angebracht wird, dass den Abstand des Auslegers überdeckt. In einer weiteren vorteilhaften Ausführung wird das Lüftungsgitter an dem Ausleger oder an einem umlaufenden Rahmen angebracht. In einer abgewandelten Ausführungsform ist das Lüftungsgitter nach oben gewölbt und ansonsten formschlüssig.

Gemäß einer Ausführungsform der Ladevorrichtung umfasst das Gehäuse an einer von dem Ausleger abgewandten Seite einen Gehäuseabschluss. Auf dem Gehäuseabschluss, der Beispielsweise als Gehäusewand oder Gehäusetür ausgebildet sein kann, ist insbesondere eine Anzeigevorrichtung platzierbar. Eine derartig platzierte Anzeigevorrichtung steht insbesondere über das Gehäuse und/oder die Aussparung hinaus. Das heißt, sie ist modular abgebracht und außen auf das Gehäuse aufgesetzt. Dadurch, dass die Anzeigevorrichtung an einer von dem Ausleger abgewandten Seite angeordnet ist, ist der Ausleger dennoch bündig mit dem Gehäuse. Beispielsweise ist der Ausleger an einer Vorderseite der Ladevorrichtung angeordnet und die Anzeigevorrichtung an einer Querseite. Die Platzierung der Anzeigevorrichtung auf dem Gehäuseabschluss ermöglicht ein leichtes und bequemes Ablesen von Informationen, da sie über das Gehäuse und/oder die Aussparung hinaussteht. Dadurch wird die Sichtbarkeit der angezeigten Informationen verbessert, insbesondere in Bereichen mit eingeschränkter Sicht. Insbesondere eignet sich die Anzeigevorrichtung als flexible Informations- oder Werbefläche. Die Positionierung der Anzeigevorrichtung an einer abgewandten Seite des Auslegers nutzt den vorhandenen Raum effizient und kann neben der Anzeige von Ladeinformationen auch für andere Zwecke wie Werbung oder Anweisungen oder Verkehrsinformation verwendet werden, ohne die Hauptfunktionen der Ladevorrichtung zu beeinträchtigen.

Gemäß einer Ausführungsform sind bei einem Verfahren zum Installieren der Ladevorrichtung drei oder vier Aufnahmepunkte zum Koppeln des Lagers vorgesehen und zumindest ein Transportelement wird an den drei oder vier Aufnahmepunkten angebracht, und/oder ein zur mechanischen Stützung des Auslegers ausgebildeter umlaufender Rahmen wird an den Aufnahmepunkten angebracht. Die Verwendung von drei oder vier Aufnahmepunkten zur Befestigung des Lagers sorgt für eine gleichmäßige Verteilung der Last und erhöht die Stabilität der Ladevorrichtung. Das Anbringen von Transportelementen an mehreren Aufnahmepunkten erleichtert den Transport und die Positionierung der Ladevorrichtung, da das Gewicht besser verteilt und die Handhabung vereinfacht wird.

Gemäß einer Ausführungsform wird bei einem Verfahren zum Installieren der Ladevorrichtung ein zur mechanischen Stützung des Auslegers ausgebildeter umlaufender Rahmen an den Aufnahmepunkten angebracht. Ein umlaufender Rahmen, der an den Aufnahmepunkten angebracht ist, bietet zusätzliche mechanische Stützung für den Ausleger und erhöht dessen Robustheit und Lebensdauer. Die Möglichkeit, einen umlaufenden Rahmen an den Aufnahmepunkten anzubringen, unterstützt eine modulare Bauweise der Ladevorrichtung, was Reparaturen und Upgrades erleichtert. Mit dem Rahmen können das bzw. die Lager und der oder die Ausleger in vormontierter Weise gemeinsam bzw. modular an dem Gehäuse angebracht werden. Dazu braucht lediglich der Rahmen an den Aufnahmepunkten befestigt zu werden. In einer vorteilhaften Verfeinerung dieser Ausführungsform wird zwischen dem umlaufenden Rahmen und dem Gehäuse ein Abstand gelassen, der eine ausreichende Belüftung des Gehäuses sicherstellt. In einer weiteren vorteilhaften Verfeinerung wird der Abstand zwischen dem umlaufenden Rahmen und dem Gehäuse durch ein formschlüssiges Belüftungsgitter abgedeckt, um die Bildung eines offenen Hohlraums zu vermeiden, der Schmutz aufnehmen und festhalten kann. In einer abgewandelten Ausführungsform ist das Lüftungsgitter nach oben gewölbt.

Gemäß einer weiteren Ausführungsform wird bei einem Verfahren zum Installieren der Ladevorrichtung ein Abstand zwischen Ausleger und Gehäuse gelassen, der groß genug ist, um eine Belüftung des Gehäuses zu gewährleisten. In einer vorteilhaften Ausführung wird ein Lüftungsgitter an dem Ausleger befestigt, dass in einem eingefahrenen Zustand genau den Abstand zwischen dem Ausleger und dem Gehäuse überdeckt. So kann in vorteilhafter Weise die Bildung eines offenen Hohlraums verhindert werden, der Schmutz auffangen und festhalten könnte, und gleichzeitig eine Belüftung des Gehäuses auch in eingefahrenem Zustand des Auslegers sichergestellt. In einer abgewandelten Ausführungsform ist das Lüftungsgitter nach oben gewölbt.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine schematische Darstellung einer Ladevorrichtung für elektrische Straßenfahrzeuge gemäß einem Ausführungsbeispiel;
- Fig. 2: eine schematische Darstellung einer Ladevorrichtung gemäß einem Ausführungsbeispiel;
- Fig. 3: eine schematische Darstellung einer Ladevorrichtung gemäß einem Ausführungsbeispiel;
- Fig. 4: eine schematische Draufsicht einer Ladevorrichtung gemäß einem weiteren Ausführungsbeispiel;
- Fig. 5: ein Flussdiagramm eines Verfahrens zum Installieren einer Ladevorrichtung;
- Fig. 6A-C: eine schematische Ansicht der Verfahrensschritte S1 bis S3 gemäß Fig. 4 zum Installieren einer Ladevorrichtung;
- Fig. 7: eine seitliche Detailansicht einer Belüftungseinrichtung einer Ladevorrichtung;
- Fig. 8: eine weitere seitliche Ansicht einer Belüftungseinrichtung einer Ladevorrichtung;
- Fig. 9: eine Frontansicht einer Ladevorrichtung gemäß einem Ausführungsbeispiel;
- Fig. 10: eine perspektivische Ansicht eines Rahmens und einer Belüftungseinrichtung gemäß einem Ausführungsbeispiel;

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

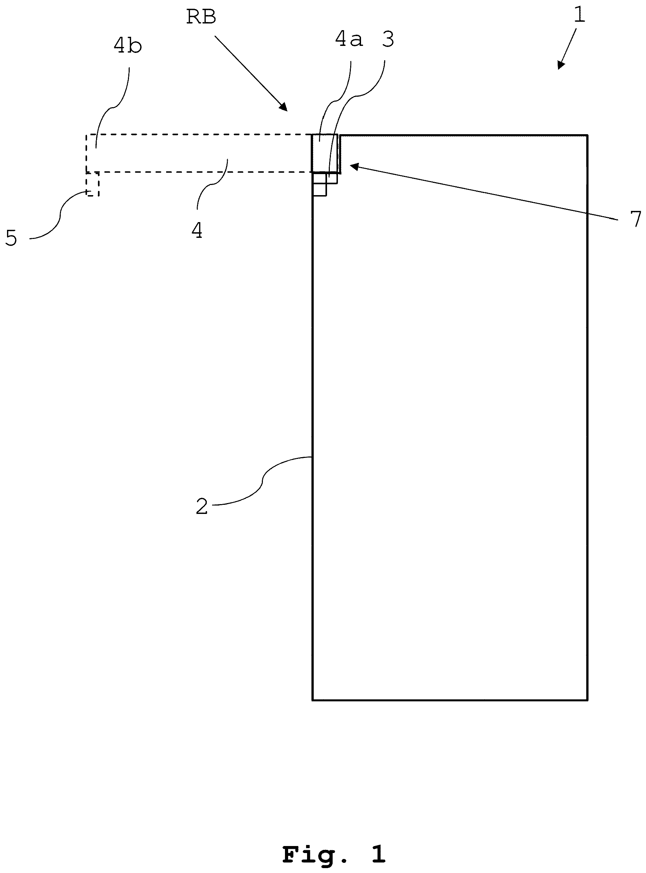

Fig. 1 zeigt eine schematische Darstellung einer Ladevorrichtung 1 für elektrische Straßenfahrzeuge gemäß einem Ausführungsbeispiel.

Die Ladevorrichtung 1 weist ein Gehäuse 2 auf, das eine mehreckige Grundfläche aufweist. In einem oberen Randbereich RB des Gehäuses ist eine Aussparung 7 vorgesehen. In oder an der Aussparung 7 ist im Bereich eines Ecks ein Lager 3 angeordnet. An dem Lager ist ein erstes Ende eines Auslegers 4 schwenkbar gelagert. Das zweite Ende 4b des Auslegers ist mit einer Kabelaufhängung 5 für ein Ladekabel koppelbar ausgebildet.

Der Ausleger 4 ist in einem hier gestrichelt dargestellten ausgefahrenen Zustand von dem ersten Ende 4a bis zu dem zweiten Ende 4b über das Gehäuse 2 hinaus ausschwenkbar. In einem mit durchgezogenen Linien dargestellten eingefahrenen Zustand ist der Ausleger im Wesentlichen bündig mit dem Gehäuse 2 in der Aussparung 7 aufnehmbar ist.

Unter im Wesentlichen bündig ist dabei zu verstehen, dass der überwiegende Teil bündig ist, aber auch ein kleinerer Teil abstehen kann, insbesondere das zweite Ende mit einem Winkel oder einer Kröpfung versehen sein kann, um die Kabelaufhängung 5 zu koppeln.

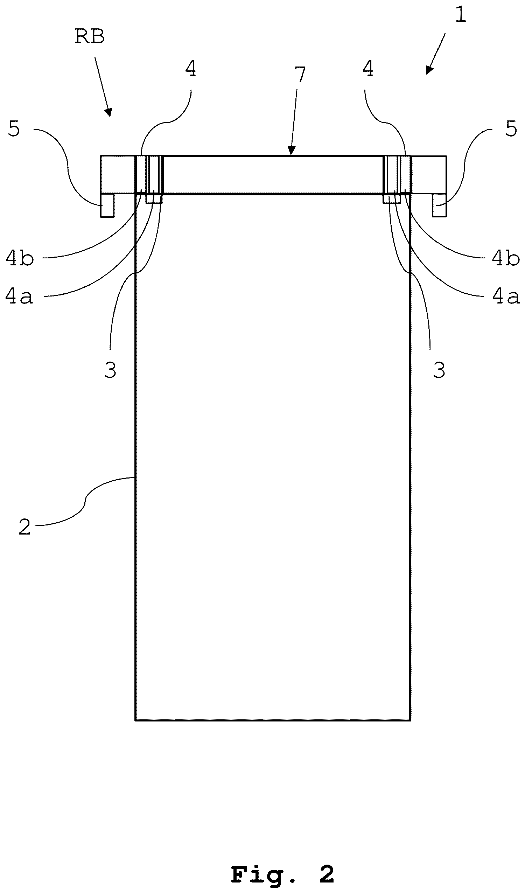

Fig. 2 zeigt eine schematische Darstellung einer Ladevorrichtung gemäß einem Ausführungsbeispiel.

Abgebildet ist eine Ladevorrichtung 1 für elektrische Stra-βenfahrzeuge mit ebenfalls einem Gehäuse 2, das einen oberen Randbereich RB und zwei Aussparungen 7 aufweist. Innerhalb der der beiden Aussparungen 7 ist jeweils im Bereich eines Ecks ein Lager 3 angeordnet, welches in oder an der jeweiligen Aussparung 7 angeordnet ist. In dem Lager 3 ist jeweils mit seinem ersten Ende 4a ein Ausleger 4 gelagert, welcher in dem Randbereich RB anhand des Lagers 3 schwenkbar gelagert ist. Im Unterschied zu Figur 1 handelt es sich hierbei um einen zweiteiligen Ausleger, dessen beide Teile jeweils ein Ende bilden und, beispielswiese mit einem Scharnier, gelenkig gekoppelt sind.

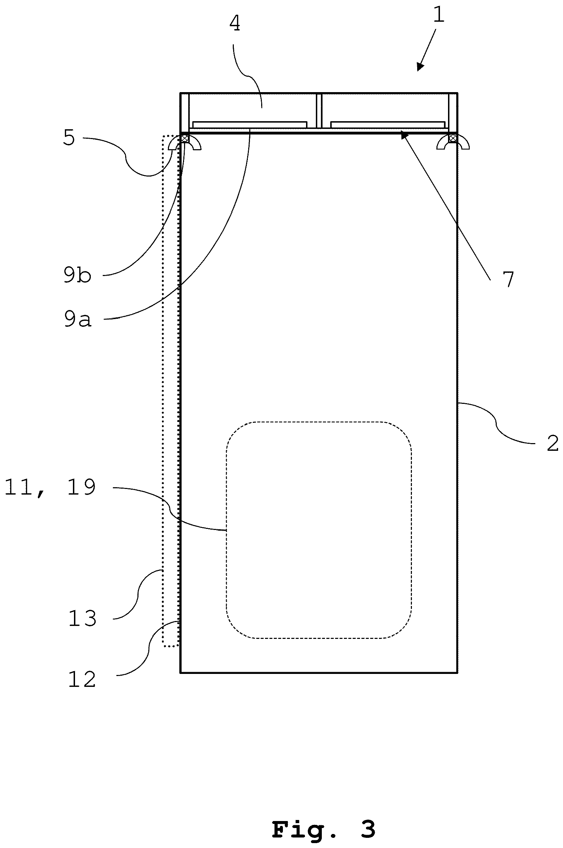

An dem zweiten Ende 4b ist der jeweilige Ausleger 4 jeweils mit einer Kabelaufhängung 5 für ein Ladekabel koppelbar. Auch hier ist der jeweilige Ausleger 4 in einem ausgefahrenen Zustand von dem ersten Ende 4a bis zu dem zweiten Ende 4b über das Gehäuse 2 hinaus ausschwenkbar und in einem eingefahrenen Zustand im Wesentlichen bündig mit dem Gehäuse 2 in der Aussparung 7 aufnehmbar. Unter im Wesentlichen bündig ist hier zu verstehen, dass der überwiegende Teil bündig mit dem Gehäuse ist, aber das zweite Ende mit einem Winkel oder einer Kröpfung versehen ist, um eine sich vor dem Gehäuse befindliche Kabelaufhängung 5 (siehe Fig. 3) zu koppeln.

Fig. 3 zeigt eine schematische Darstellung einer Ladevorrichtung gemäß einem Ausführungsbeispiel.

Die Darstellung zeigt in einer Vorderansicht die Integration zweier Ausleger 4 innerhalb einer gemeinsamen Aussparung 7. Auch hier sind mit einem bündigen Abschluss an dem Gehäuse 2 der Ladevorrichtung 1 direkt anliegend. Integraler Bestandteil der Ausleger 4 ist eine Beleuchtung 9 anhand eines jeweils längs eingefassten Lichtelements 9a.

Zusätzlich ist eine an dem zweiten Ende 4b des Auslegers 4 angebundene Kabelaufhängung 5 und ein an dem zweiten Ende 4b vorgesehenes Beleuchtungselement 9b abgebildet.

Das Gehäuse 2 umfasst in der vorliegenden Ausführung einen Gehäuseabschluss 12, an der von einem Ausleger 4 abgewandten Seite, hier der Querseite. Auf dem Gebäudeabschluss ist eine optionale durch die gestrichelte Linie symbolisierte Anzeigevorrichtung 13 platzierbar, die über das Gehäuse 2 und die Aussparung 7 hinaussteht.

Verdeckt durch das Gehäuse 2 ist ein im Inneren der Ladevorrichtung 1 aufnehmbares Klimatisierungsmodul11 dargestellt, welches ebenfalls durch eine gestrichelte Linie symbolisiert ist.

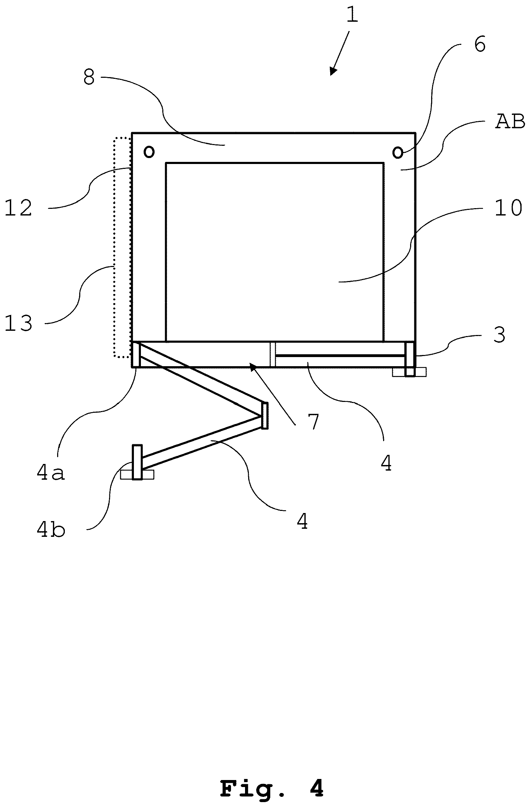

Fig. 4 zeigt eine schematische Draufsicht einer Ladevorrichtung 1 gemäß einem weiteren Ausführungsbeispiel.

Dargestellt ist hier ebenfalls eine zweiteilige Variante des Auslegers 4, der in einem ausgefahrenen Zustand von dem ersten Ende 4a bis zu dem zweiten Ende 4b über das Gehäuse 2 hinaus ausschwenkbar und ein einem eingefahrenen Zustand im Wesentlichen bündig mit dem Gehäuse 2 in der Aussparung 7 in einem Lager 3 aufnehmbar ist. Ein in der Aussparung 7 aufgenommener umlaufender Rahmen 8 stützt hier die Ausleger 4.

Ein Anschlussbereich AB mit zumindest zwei Aufnahmepunkten 6, vorzugsweise drei oder vier Aufnahmepunkten 6, ist an dem Gehäuse der Ladevorrichtung 1 vorgesehen.

Die Ladevorrichtung 1 umfasst anhand der Fig. 4 ferner eine Belüftungseinrichtung 10, die beispielsweise für ein Klimatisierungsmodul 11 für die Kühlung Innerer Komponenten, wie einer Ladeelektronik und/oder eines im Inneren des Gehäuses 2 aufnehmbaren Batteriemoduls 19 dient.

Zusätzlich ist auch hier an einem Gehäuseabschluss 12, an der von dem Ausleger 4 abgewandten Seite, eine optionale durch die gestrichelte Linie gekennzeichnete Anzeigevorrichtung 13 platziert, die über das Gehäuse 2 und über die Aussparung 7 hinaussteht.

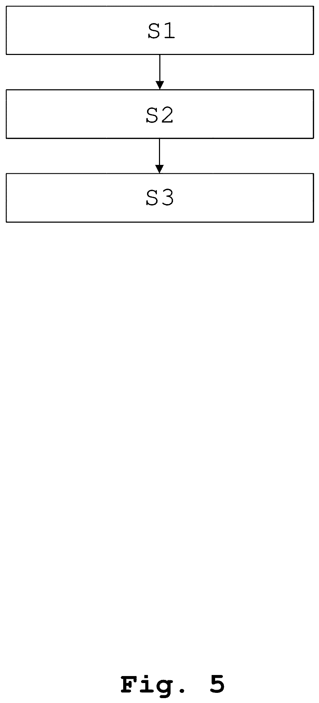

Fig. 5 zeigt ein Flussdiagramm eines Verfahrens zum Installieren einer Ladevorrichtung.

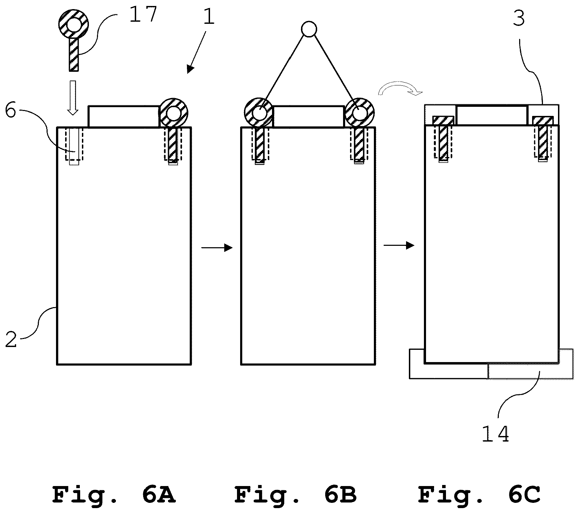

Abgebildet sind die Verfahrensschritte S1 bis S3. Der Verfahrensschritt S1 betrifft das Bereitstellen einer Ladevorrichtung 1 mit einem Gehäuse 2, der Verfahrensschritt S2 das Koppeln der Aufnahmepunkte 6 mit zumindest einem Transportelement 17 und der Verfahrensschritt S3 das Positionieren der Ladevorrichtung 1 an einem vorbestimmten Ort. Eine detaillierte Beschreibung der Verfahrensschritte S1 bis S3 folgt anhand der nachfolgenden Fig. 6A bis 6C.

Die Fig. 6A bis 6C zeigen schematische Ansichten der Verfahrensschritte S1 bis S3 gemäß Fig. 4 zum Installieren einer Ladevorrichtung.

Fig. 6A zeigt eine schematische Ansicht des Verfahrensschritts S1 gemäß Fig. 5 zum Installieren einer Ladevorrichtung 1, wobei eine Ladevorrichtung 1 mit einem Gehäuse 2 bereitgestellt wird, welches einen Randbereich RB aufweist, in dem zumindest zwei mechanische Aufnahmepunkte 6 angeordnet sind, in denen zumindest zwei Transportelemente 17 gekoppelt werden.

Fig. 6B zeigt eine schematische Ansicht des Verfahrensschritts S2 gemäß Fig. 5 zum Installieren einer Ladevorrichtung 1, wobei die Aufnahmepunkte 6 mit zumindest einem Transportelement 17 gekoppelt sind, um die Ladevorrichtung 1 an einen vorbestimmten Ort zu transportieren und auszurichten. Beispielhaft kann dazu ein hier symbolisierter Kran eingesetzt werden.

Fig. 6C zeigt eine schematische Ansicht des Verfahrensschritts S3 gemäß Fig. 5 zum Installieren einer Ladevorrichtung 1, wobei diese an einem vorbestimmten Ort positioniert wird und die Ladevorrichtung 1 über zumindest ein Transportelement 17 transportiert und/oder ausgerichtet wird.

Rein beispielhaft erfolgt das Positionieren der Ladevorrichtung 1 hier auf einer auf einem Boden befestigten Schnittstelleneinheit 14 als vorbestimmer Ort.

Im Anschluss folgt das hier nicht im Einzelnen gezeigte Entfernen des zumindest einen Transportelements 17 von den Aufnahmepunkten 6, umgekehrt zu Fig. 6A. Außerdem zeigt die Ansicht aber das Koppeln eines Lagers 3 mit den Aufnahmepunkten 6 zur Aufnahme eines Auslegers.

Beispielhaft wird hier dazu ein umlaufender Rahmens 8 über die zumindest zwei Aufnahmepunkte 6 mit Befestigungsmitteln gekoppelt, in dem das Lager 3 integriert ist zur Aufnahme eines Auslegers 4, der in dem Randbereich RB anhand des Lagers 3 schwenkbar gelagert wird.

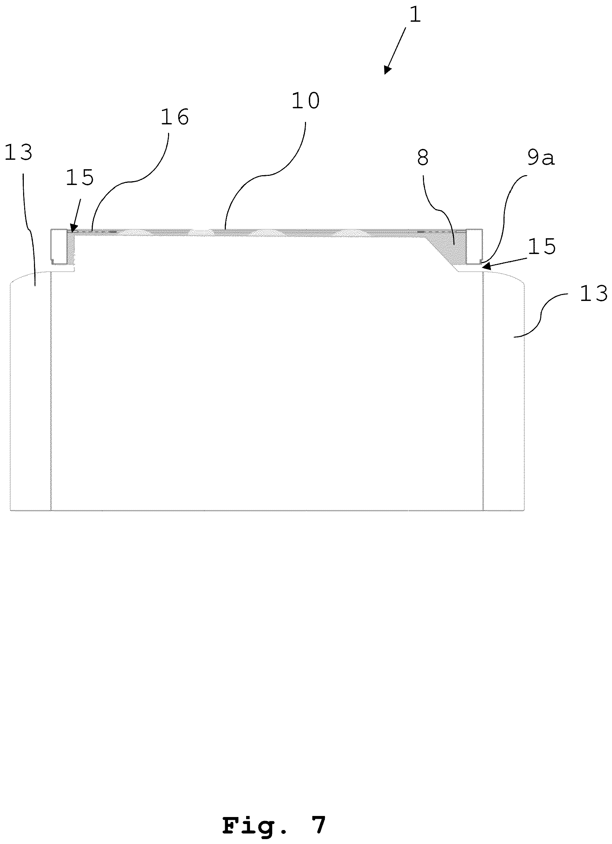

Fig. 7 zeigt eine seitliche Detailansicht einer Belüftungseinrichtung 10 einer Ladevorrichtung 1.

Abgebildet ist eine Belüftungseinrichtung 10 und ein Lüftungsgitter 16 einer Ladevorrichtung 1. Hierbei ist in oder an der Aussparung 7 im eingefahrenen Zustand des Auslegers 4 zwischen Gehäuse 2 und Ausleger 4 ein für einen Luftstrom der Belüftungseinrichtung 10 ausgelegter Abstand 15 und ein für einen Luftstrom der Belüftungseinrichtung 10 ausgelegtes Lüftungsgitter 16 vorgesehen.

Im umlaufenden Rahmen 8 sitzt längs ausgerichtet ferner ein Lichtelement 9a. Zusätzlich sind Anzeigevorrichtungen 13 an beiden Querseiten der Ladevorrichtung 1 angebracht.

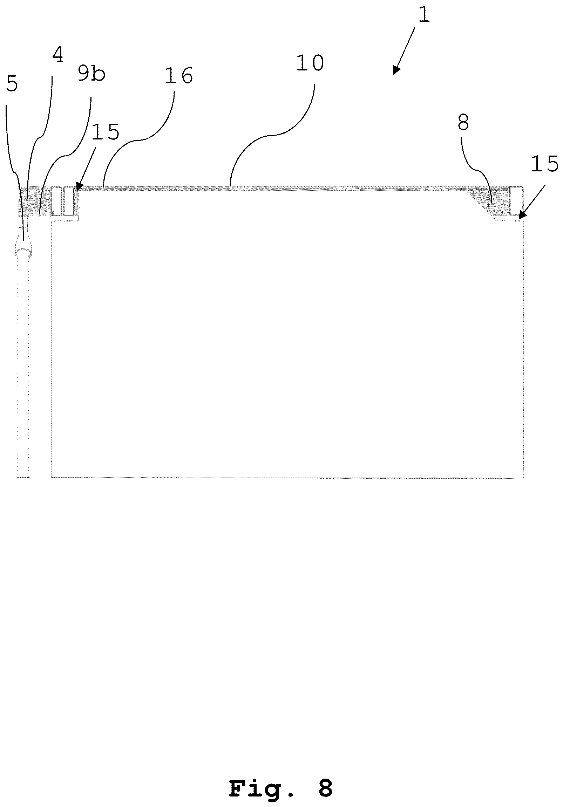

Fig. 8 zeigt eine weitere seitliche Ansicht einer Belüftungseinrichtung 10 einer Ladevorrichtung 1.

Abgebildet ist hier eine seitliche Ansicht des im Rahmen 8 gelagerten Auslegers 4 und einer Kabelaufhängung 5 der Ladevorrichtung 1. In einem Abgewinkelten Bereich des zweiten Endes, der die Kabelaufhängung 5 mit dem Ausleger 4 koppelt, ist ein Beleuchtungselement 9b verbaut. Die Belüftungseinrichtung 10, das Lüftungsgitter 16 und die Abstände 15 sind so vorgesehen, dass in oder an der Aussparung 7 im eingefahrenen Zustand des Auslegers 4 zwischen Gehäuse 2 und Ausleger 4 ein für einen Luftstrom der Belüftungseinrichtung 10 ausgelegter Abstand 15 und/oder ein für einen Luftstrom der Belüftungseinrichtung 10 ausgelegtes Lüftungsgitter 16 vorgesehen ist.

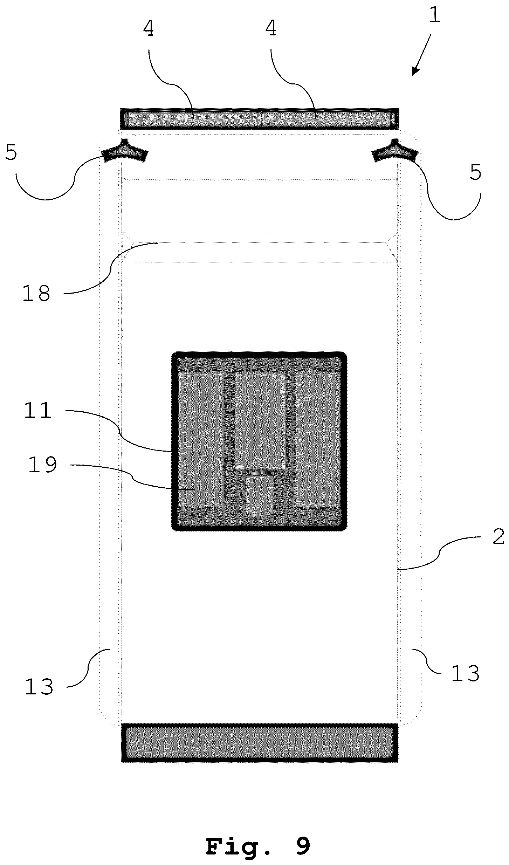

Fig. 9 zeigt eine Frontansicht einer Ladevorrichtung gemäß einem Ausführungsbeispiel.

Abgebildet sind auch hier, analog zu Fig. 3, die beiden Ausleger 4 in ihrer zweiteiligen Variante mit der jeweiligen Kabelaufhängung 5. Außerdem das Gehäuse 2 der Ladevorrichtung 1 mit einem im Inneren integrierten Klimatisierungsmodul 11, das zur Kühlung von Elektronikkomponenten oder einem integrierten Batteriemodul 19 ausgebildet ist. Im Unterschied zu Fig. 3 sind hier beidseitig zwei optional durch eine gestrichelte Linie gekennzeichnete Anzeigevorrichtungen 13 wie auch ein an der Seite der Ausleger vorgesehenen Kabelauslass 18 des Gehäuses 2 dargestellt, aus welchem ein an der Kabelaufhängung 5 lagerbares Ladekabel aus dem Gehäuse 2 herausgeführt werden kann.

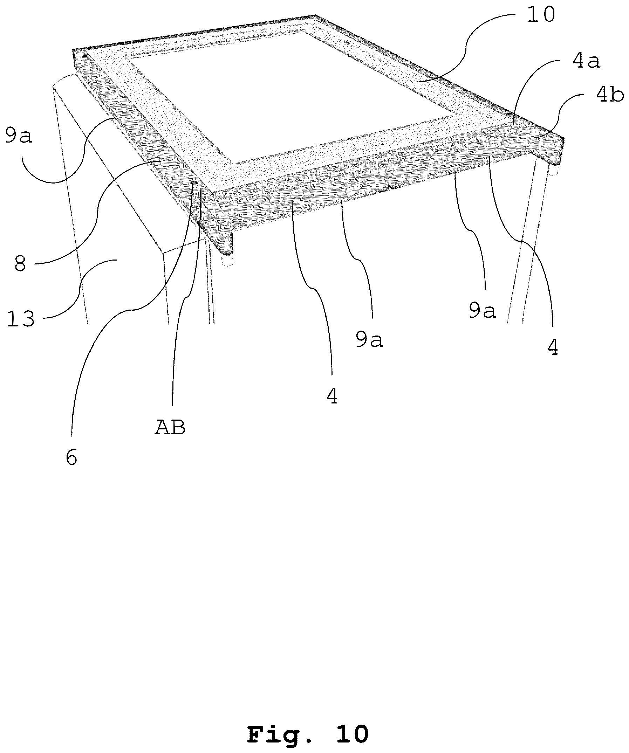

Fig. 10 zeigt eine perspektivische Detailansicht des Rahmens 8 und der Belüftungseinrichtung 10 gemäß einem Ausführungsbeispiel.

Abgebildet ist der hier beispielhaft rechteckige Rahmen 8 mit einem längs integrierten Lichtelement 9a und der Belüftungseinrichtung 10.

Die Ausleger 4 sind an einer Vorderseite in der Variante als zweiteilige Ausleger abgebildet und integrieren jeweils ebenfalls an ihrer Außenseite längs ein Lichtelement 9a. Im Anschlussbereich AB sind innerhalb des Rahmens 8 hier beispielhaft vier Aufnahmepunkte 6 für die Befestigung des Rahmens 8 vorgesehen.

Außerdem hat auch hier die Ladevorrichtung 1 an einer Querseite eine seitlich auf das Gehäuse aufgesetzte Anzeigevorrichtung 13.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

### Bezugszeichenliste

- 1: Ladevorrichtung
- 2: Gehäuse
- 3: Lager
- 4: Ausleger
- 4a: Erstes Ende Ausleger
- 4b: Zweites Ende Ausleger
- 5: Kabelaufhängung
- 6: Aufnahmepunkt
- 7: Aussparung
- 8: Rahmen
- 9: Beleuchtung
- 9a: Lichtelement
- 9b: Beleuchtungselement
- 10: Belüftungseinrichtung
- 11: Klimatisierungsmodul
- 12: Gehäuseabschluss
- 13: Anzeigevorrichtung
- 14: Schnittstelleneinheit
- 15: Abstand
- 16: Lüftungsgitter
- 17: Transportelement
- 18: Kabelauslass
- 19: Batteriemodul

## Patentansprüche

1. Ladevorrichtung (1) für elektrische Straßenfahrzeuge, mit:
einem Gehäuse (2), das eine mehreckige Grundfläche aufweist und in einem oberen Randbereich (RB) eine Aussparung (7) aufweist;
einem Lager (3), welches in oder an der Aussparung (7) im Bereich eines Ecks angeordnet ist; und
einem Ausleger (4), welcher ein erstes Ende (4a) und ein zweites Ende (4b) aufweist, wobei das erste Ende (4a) in dem Randbereich (RB) anhand des Lagers (3) schwenkbar gelagert ist und das zweite Ende (4b) mit einer Kabelaufhängung (5) für ein Ladekabel koppelbar ist,
wobei der Ausleger (4) in einem ausgefahrenen Zustand von dem ersten Ende (4a) bis zu dem zweiten Ende (4b) über das Gehäuse (2) hinaus ausschwenkbar und in einem eingefahrenen Zustand im Wesentlichen bündig mit dem Gehäuse (2) in der Aussparung (7) aufnehmbar ist.

2. Ladevorrichtung (1) nach Anspruch 1,
**dadurch gekennzeichnet,**
**dass** das Gehäuse (2) einen, insbesondere innerhalb der Aussparung (7) angeordneten, Anschlussbereich (AB) aufweist, in welchem zumindest zwei Aufnahmepunkte (6), vorzugsweise drei oder vier Aufnahmepunkte (6), für ein Transportelement (17) zur Kopplung des Lagers (3) mit dem Gehäuse (2) vorgesehen sind.

3. Ladevorrichtung (1) nach Anspruch 2,
**dadurch gekennzeichnet,**
**dass** das Gehäuse (2) zur mechanischen Stützung des Auslegers (4) einen umlaufenden Rahmen (8) aufweist, der insbesondere im Wesentlichen bündig mit dem Gehäuse (2) abschließt und/oder der insbesondere lösbar an dem Gehäuse befestigt ist.

4. Ladevorrichtung (1) nach Anspruch 3,
**dadurch gekennzeichnet,**
**dass** das Lager (3) in dem umlaufenden Rahmen (8) vorgesehen ist, insbesondere integral in dem umlaufenden Rahmen (8) aufgenommen oder ausgebildet ist.

5. Ladevorrichtung (1) nach Anspruch 3 oder 4,
**dadurch gekennzeichnet,**
**dass** die Aussparung (7) um das Gehäuse (2) umlaufend ausgebildet und der Rahmen (8) in der Aussparung (7) aufgenommen ist.

6. Ladevorrichtung (1) nach einem der Ansprüche 3 bis 5, **dadurch gekennzeichnet,**
**dass** der Rahmen (8) eine darin integrierte Beleuchtung (9) aufweist.

7. Ladevorrichtung (1) nach einem der Ansprüche 3 bis 6, **dadurch gekennzeichnet,**
**dass** der Ausleger (4) manuell ausschwenkbar ist, wobei der Ausleger (4) und/oder das Lager (3) insbesondere eine Rückholeinrichtung zum selbsttätigen Einfahren des Auslegers (4) aufweist, wobei der Ausleger vorzugsweise in dem eingefahrenen Zustand an dem Gehäuse (2) anliegt und besonders bevorzugt in zumindest einer Richtung bündig damit angeordnet ist.

8. Ladevorrichtung (1) nach einem der vorhergehenden Ansprüche,
**dadurch gekennzeichnet,**
**dass** der Ausleger (4) eine integrierte Beleuchtung (9) aufweist, die insbesondere darin eingefasst ist.

9. Ladevorrichtung (1) nach Anspruch 8,
**dadurch gekennzeichnet,**
**dass** die Beleuchtung (9) ein zumindest abschnittsweise längs des Auslegers (4) verlaufendes Lichtelement (9a) umfasst, das insbesondere zum Abstrahlen in eine Umgebung ausgelegt ist.

10. Ladevorrichtung (1) nach Anspruch 8 oder 9, **dadurch gekennzeichnet,**
**dass** die Beleuchtung (9) im Bereich des zweiten Endes (4b) des Auslegers (4) ein Beleuchtungselement (9b) aufweist, welches insbesondere zur Beleuchtung eines mit der Kabelaufhängung (5) geführten Ladekabels ausgelegt ist.

11. Ladevorrichtung (1) nach einem der vorhergehenden Ansprüche,
**dadurch gekennzeichnet,**
**dass** das Gehäuse (2) eine Belüftungseinrichtung (10), insbesondere für ein im Inneren des Gehäuses (2) aufnehmbares Klimatisierungsmodul (11), umfasst, wobei in oder an der Aussparung (7) im eingefahrenen Zustand des Auslegers (4) zwischen Gehäuse (2) und Ausleger (4) ein für einen Luftstrom der Belüftungseinrichtung (10) ausgelegter Abstand (15) und/oder ein für einen Luftstrom der Belüftungseinrichtung (10) ausgelegtes Lüftungsgitter (16) vorgesehen ist.

12. Ladevorrichtung (1) nach Anspruch 11,
**dadurch gekennzeichnet,**
**dass** ferner ein im Inneren des Gehäuses (2) aufnehmbares Batteriemodul (19) vorgesehen ist, das durch die Belüftungseinrichtung gekühlt werden kann, insbesondere direkt durch den Luftstrom und/oder indirekt über das Klimatisierungsmodul (11).

13. Ladevorrichtung (1) nach einem der vorhergehenden Ansprüche,
**dadurch gekennzeichnet,**
**dass** das Gehäuse (2) an einer von dem Ausleger (4) abgewandten Seite einen Gehäuseabschluss (12) umfasst, auf welchem eine Anzeigevorrichtung (13) platzierbar ist, die insbesondere über das Gehäuse (2) und/oder die Aussparung (7) hinaussteht.

14. Verfahren zum Installieren einer Ladevorrichtung, insbesondere einer Ladevorrichtung (1) nach einem der vorstehenden Ansprüche, umfassend die Schritte:
Bereitstellen (S1) einer Ladevorrichtung (1) mit einem Gehäuse (2), welches einen Randbereich (RB) aufweist, in dem zumindest zwei mechanische Aufnahmepunkte (6) angeordnet sind;
Koppeln (S2) der Aufnahmepunkte (6) mit zumindest einem Transportelement (17), das zum Transport und/oder zur Ausrichtung der Ladevorrichtung (1) ausgelegt ist;
Positionieren (S3) der Ladevorrichtung (1) an einen vorbestimmten Ort, wobei die Ladevorrichtung (1) über zumindest ein Transportelement (17) transportiert und/oder ausgerichtet wird;
Entfernen des zumindest einen Transportelements (17) von den Aufnahmepunkten (6); und
Koppeln eines Lagers (3) mit den Aufnahmepunkten (6) zur Aufnahme eines Auslegers (4), der in dem Randbereich (RB) anhand des Lagers (3) schwenkbar gelagert wird.

15. Verfahren nach Anspruch 14,
**dadurch gekennzeichnet,**
**dass** drei oder vier Aufnahmepunkte (6) zum Koppeln des Lagers (3) vorgesehen sind und dass zumindest ein Transportelement an den drei oder vier Aufnahmepunkten angebracht wird, und/oder dass ein zur mechanischen Stützung des Auslegers (4) ausgebildeter umlaufender Rahmen (8) an den Aufnahmepunkten (6) angebracht wird.
